# EUROPÄISCHE PATENTSCHRIFT

(11) **EP 1 498 680 B1**
(45) Veröffentlichungstag und Bekanntmachung des Hinweises auf die Patenterteilung: **16.01.2008**
(21) Anmeldenummer: 04014437.0
(22) Anmeldetag: 19.06.2004
(51) Int. Cl.: F28D 20/02, F25D 3/00

(54) **Verwendung eines Melamin/Formaldehyd-Schaumstoffs als Kühlmittelakku**
Use of melamine-formaldehyde foam as cold storage accumulator
Utilisation de mousse de mélamine-formaldéhyde pour accumulateur de froid

(30) Priorität: 16.07.2003 DE 10332463
(43) Veröffentlichungstag der Anmeldung: 19.01.2005
(73) Patentinhaber: BASF Aktiengesellschaft, 67056 Ludwigshafen (DE); FEBRA-Kunststoffe GmbH & Co., 74336 Brackenheim-Dürrenzimmern (DE)
(72) Erfinder: Vath, Bernhard, 68259 Mannheim (DE); Möck, Christof, Dr., 68259 Mannheim (DE); Wörthwein, Hans, 74384 Lauffen (DE)

(56) Entgegenhaltungen:
- EP-A- 0 037 470
- EP-A- 0 623 662
- DE-A- 10 243 240
- DE-U- 8 408 966
- US-B1- 6 200 681

## Beschreibung

Die Erfindung betrifft die Verwendung einer Thermospeichereinheit, die einen offenzelligen Schaumstoff auf Basis eines Melamin/Formaldehyd-Kondensationsproduktes enthält, dessen Zellporen ganz oder teilweise mit einem fließfähigen Wärmeträger gefüllt sind.

Offenzellige Schaumstoffe auf Basis eines Melamin/Formaldehyd-Kondensationsproduktes sind für verschiedene wärme- und schalldämmende Anwendungen in Gebäuden und Fahrzeugen, sowie als isolierendes und stoßdämmendes Verpackungsmaterial z.B. aus EP-A 037 470 bekannt. Die offenzellige Struktur erlaubt die Aufnahme und Speicherung geeigneter Reinigungs- Schleif- und Poliermittel bei der Anwendung als Reinigungs- Schleif- und Polierschwamm (WO 01/94436).

Aus dem deutschen Gebrauchsmuster 94 19 804 ist die Verwendung von offenzelligen Schaumstoffen von Duromer-Kunststoffen, z. B. auf Basis eines Melamin/Formaldehyd-Kondensationsproduktes, als Schallabsorptionselement für eine Zylinderkopfabdeckung bekannt. Um zu verhindern, dass sich die Oberfläche des Schaumstoffes durch Öle oder Fette zusetzt, wird vorgeschlagen, diesen mit einer ölbeständigen Kunststofffolie oder Faservlies zu ummanteln.

Die US 5,457,136 beschreibt vernetzte Gelatineschaumstoffe zur thermischen Isolierung, insbesondere von Rohren. Hierzu wird die wässrige Gelatine mit Glutaraldehyd als Vernetzer und gegebenenfalls einen sekundären Vernetzer, z. B einem Melamine/Formaldehyd-Kondensationsprodukt verschäumt und getrocknet.

Das deutsche Gebrauchsmuster 8408966 U1 beschreibt ein Kälte- und Wärmeträgerkissen, das eine mit Flüssigkeit getränkte, nicht näher spezifizierte Schaumstoffmatte in einer rundherum verschweißten Kunststoffhülle wasser- und luftdicht verschlossen enthält.

EP-A 623 662 beschreibt Mikrokapseln für wärmespeichernde Materialien. Die Mikrokapseln können aus einem Melamin/Formaldehyd-Präkondensat hergestellt werden und enthalten ein Phasentransfer-Material. Die Mikrokapsel-Dispersion wird in eine stabile Polyethylen-Tasche gepackt. Die Verwendung von Schaumstoffen wird nicht genannt.

Herkömmliche Kühlakkus besitzen häufig eine zu starre Außenhaut und ermöglichen keinen ausreichenden Kontakt zur Oberfläche des zu kühlenden Materials oder die Außenhaut ist so dünn, dass der Kühlakku leicht verformbar ist und das ummantelte Kühlgel bei Beschädigung der Außenhaut leicht auslaufen kann. Für die Kühlung von temperaturempfindlichen Gütern, insbesondere im medizinischen und pharmazeutischen Bereich, ist gegenüber herkömmlichen Kühlakkus eine verbesserte Kühlleistung gewünscht, um eine gleichmäßige Kühlung bis zu 48 Stunden oder mehr zu gewährleisten.

Aufgabe der vorliegenden Erfindung war es, den vorgenannten Nachteilen abzuhelfen und eine Thermospeichereinheit zur Verwendung als Kühlakku bereitzustellen, wodurch der Kühlmittelakku formstabil ist, eine gleichmäßige Kühlung ermöglicht und mit einem fließfähigen Wärmeträgermedium weitgehend auslaufsicher gefüllt ist.

Demgemäss wurde die oben beschriebene Thermospeichereinheit verwendet.

Die Thermospeichereinheit wird zum Kühlen verwendet. Der Wärmeträger wird je nach Anwendungszweck und Temperaturbereich ausgewählt. Er sollte zumindest in Teilbereichen der Temperaturen bei der Anwendung oder Befüllung, in der Regel bei Raumtemperatur fließfähig sein. Als Kühlakku wird die Thermospeichereinheit bevorzugt mit einem Kühlgel oder einem Phase Change Material (PCM) als Wärmeträger eingesetzt.

Der offenzellige Schaumstoff der Thermospeichereinheit wird bevorzugt mit einem gegenüber dem Wärmeträger beständiger Ummantelung versehen. Bevorzugt besteht die Ummantelung aus einer Folie aus Polyolefin, wie Polyethylen oder Polypropylen.

Besonders bevorzugt wird die Thermospeichereinheit als Kühlmittelakku, insbesondere zur Kühlung beim Transport und Zwischenlagerung von temperatursensitiven Gütern, z. B. Medikamenten oder Organen verwendet. Hierzu ist ein mit einem Kühlgel oder einem Phase Change Material (PCM) ganz oder teilweise gefüllter, offenzelliger Schaumstoff auf Basis eines Melamin/Formaldehyd-Kondensationsproduktes mit einer Ummantelung aus einer Folie aus Polyolefin als Kühlakku geeignet. Der Kühlakku wird in einem Transportbehälter aus Poly-styrol- oder Polypropylen-Partikelschaumstoffen eingesetzt.

Zur Herstellung der Thermospeichereinheit kann man einen offenzelligen Schaumstoff auf Basis eines Melamin/Formaldehyd-Kondensationsproduktes mit einer gegenüber dem Wärmeträger beständiger Ummantelung versehen und vor dem vollständigen Verschließen mit einem fließfähigen Wärmeträger füllen.

Als offenzellige Schaumstoffe werden elastische Schaumstoffe auf Basis eines Melamin/Formaldehyd-Kondensationsproduktes mit einer spezifischen Dichte von 5 bis 100 g/l, insbesondere von 8 bis 20 g/l, wie sie z. B nach EP-A 071 672 oder EP-A 037 470 herstellbar sind, verwendet. Dabei wird eine hochkonzentrierte, treibmittelhaltige Lösung oder Dispersion eines Melamin-Formaldehyd-Vorkondensates mit Heißluft, Wasserdampf oder durch Mikrowellenbestrahlung verschäumt und ausgehärtet.

Das Molverhältnis Melamin/Formaldehyd liegt im allgemeinen im Bereich von 1 : 1 und 1 : 5. Zur Herstellung besonders formaldehydarmer Schaumstoffe wird das Molverhältnis im Bereich von 1 : 1,3 bis 1 : 1,8 gewählt und ein sulfitgruppenfreies Vorkondensat eingesetzt, wie z. B in WO 01/94436 beschrieben.

Um die anwendungstechnischen Eigenschaften zu verbessern, können die Schaumstoffe anschließend getempert und verpresst werden. Die Schaumstoffe können zur gewünschten Form und Dicke zugeschnitten und ein- oder beidseitig mit Deckschichten kaschiert werden. Im Falle der Ummantelung mit einer Kunststofffolie ist eine Deckschicht in der Regel nicht notwendig.

## Patentansprüche

1. Verwendung einer Thermospeichereinheit, enthaltend einen offenzelligen Schaumstoff auf Basis eines Melamin/Formaldehyd-Kondensationsproduktes, wobei der Schaumstoff eine spezifische Dichte von 5 bis 100 g/l aufweist und die Zellporen ganz oder teilweise mit einem fließfähigen Wärmeträger gefüllt sind als Kühlmittelakku in einem Transportbehälter aus Polystyrol- oder Polypropylen-Partikelschaumstoff.

2. Verwendung einer Thermospeichereinheit nach Anspruch 1, **dadurch gekennzeichnet, dass** als Wärmeträger ein Kühlgel oder ein Phase Change Material (PCM) eingesetzt wird.

3. Verwendung einer Thermospeichereinheit nach Anspruch 1 oder 2, **dadurch gekennzeichnet, dass** der offenzellige Schaumstoff mit einem gegenüber dem Wärmeträger beständiger Ummantelung versehen ist.

4. Verwendung einer Thermospeichereinheit nach Anspruch 3, **dadurch gekennzeichnet, dass** die Ummantelung aus einer Folie aus Polyolefin besteht.

5. Verwendung einer Thermospeichereinheit nach einem der Ansprüche 1 bis 4, **dadurch gekennzeichnet, dass** sie ein Melamin/Formaldehyd-Kondensationsprodukt mit einem Molverhältnis Melamin/Formadehyd im Bereich von 1 : 1 und 1 : 5 enthält.

6. Verwendung einer Thermospeichereinheit nach einem der Ansprüche 1 bis 5, **dadurch gekennzeichnet, dass** der Schaumstoff auf Basis eines Melamin/Formaldehyd-Kondensationsproduktes eine spezifische Dichte von 8 bis 20 g/l aufweist.

## Claims

1. The use of a thermal storage unit comprising an open-cell foam based on a melamine-formaldehyde condensation product, wherein the foam has a density of from 5 to 100 g/l and the cell pores have been filled completely or to some extent with a flowable heat-transfer medium, as a coolant pack in a transport container composed of molded polystyrene foam or of molded polypropylene foam.

2. The use of a thermal storage unit according to claim 1, wherein the heat-transfer medium used comprises a coolant gel or a phase change material (PCM).

3. The use of a thermal storage unit as claimed in claim 1 or 2, wherein a jacket resistant to the heat-transfer medium has been provided to the open-cell foam.

4. The use of a thermal storage unit as claimed in claim 3, wherein the jacket is composed of a polyolefin foil.

5. The use of a thermal storage unit as claimed in any of claims 1 to 4, which comprises a melamine-formaldehyde condensation product with a melamine : formaldehyde molar ratio in the range from 1 : 1 to 1 : 5.

6. The use of a thermal storage unit as claimed in any of claims 1 to 5, wherein the foam which is based on a melamine-formaldehyde condensation product has a density of from 8 to 20 g/l

## Revendications

1. Utilisation d'une unité de thermo-accumulation, contenant une mousse à alvéoles ouvertes à base d'un produit de condensation mélamine/formaldéhyde, la mousse présentant une densité spécifique de 5 à 100 g/l et les pores cellulaires étant remplis totalement ou partiellement d'un fluide caloporteur en tant qu'accumulateur de réfrigérant dans un réservoir de transport constitué de mousse de particules de polystyrène ou de polypropylène.

2. Utilisation d'une unité de thermo-accumulation selon la revendication 1, **caractérisée en ce que** l'on met en oeuvre comme caloporteur un gel de refroidissement ou un Phase Change Material (matériau à changement de phase, PCM).

3. Utilisation d'une unité de thermo-accumulation selon la revendication 1 ou 2, **caractérisée en ce que** la mousse à alvéoles ouvertes est dotée d'un enrobage à l'épreuve du caloporteur.

4. Utilisation d'une unité de thermo-accumulation selon la revendication 3, **caractérisée en ce que** l'enrobage est constitué d'un film de polyoléfine.

5. Utilisation d'une unité de thermo-accumulation selon l'une des revendications 1 à 4, **caractérisée en ce qu'**elle contient un produit de condensation mélamine/formaldéhyde avec un rapport molaire mélamine/formaldéhyde dans un domaine de 1:1 à 1:5.

6. Utilisation d'une unité de thermo-accumulation selon l'une des revendications 1 à 5, **caractérisée en ce que** la mousse à base d'un produit de condensation mélamine/formaldéhyde présente une densité spécifique de 8 à 20 g/l.
